# EUROPÄISCHE PATENTANMELDUNG

(11) **EP 3 299 670 A1**
(43) Veröffentlichungstag der Anmeldung: **28.03.2018**
(21) Anmeldenummer: 16190741.5
(22) Anmeldetag: 27.09.2016
(51) Int. Cl.: F16H 57/04

(54) **GETRIEBE UND VERWENDUNG EINES RINGKÜHLERS**

(71) Anmelder: Flender GmbH, 46395 Bocholt (DE)
(72) Erfinder: Becka, Simon, 45128 Essen (DE); Messink, Christoph, 46399 Bocholt (DE); Rickert, Elmar, 46395 Bocholt (DE); Schmeink, Franz, 46395 Bocholt (DE); Striemann, Lena, 46414 Rhede (DE)
(74) Vertreter: Maier, Daniel Oliver

(57) **Zusammenfassung**

Getriebe (10), vorzugsweise Kegelstirnradgetriebe, mit einem Getriebegehäuse (1), einer Antriebswelle (2.1), auf welcher ein Lüfter (9) montiert ist, umfassend einen die Antriebswelle (2.1) umschließenden Ringkühler (4), Ölleitungen (7.1, 7.2) zum Transport von Getriebeöl in einem Ölkreislauf aus dem Inneren des Getriebegehäuses (1) zu dem Ringkühler (4) und von dem Ringkühler (4) in das Innere des Getriebegehäuses (1), und eine den Ringkühler (4) umgebende Luftleithaube (3.1, 3.2) zum Leiten von durch den Lüfter (9) angesaugter Luft auf den Ringkühler (4).

## Beschreibung

Die Erfindung bezieht sich auf ein Getriebe, vorzugsweise ein Kegelstirnradgetriebe, mit einer Antriebswelle, auf welcher ein Lüfter montiert ist, wobei das Getriebe im Bereich der Antriebswelle ein effizientes Kühlsystem aufweist.

In einem Getriebe entsteht während des Betriebs, insbesondere durch die Reibung in den Lagern und zwischen den miteinander kämmenden Zahnrädern sowie die Planschverluste der in den Ölsumpf schlagenden Zahnräder, Verlustleistung. Diese Verlustleistung führt zu einem Ansteigen der Temperatur der Getriebeöls. Da die Öltemperatur eine bestimmte Schwelle nicht überschreiten darf, ist die zulässige mechanische Grenzleistung des Getriebes durch die entstehende Wärme limitiert.

Bei Bandgetrieben kann ab einer bestimmten Größe die Wärme nicht mehr über die Oberfläche abgeführt werden. Dies ist bedingt durch die Tatsache, dass das Verhältnis von Oberfläche zu Volumen umso geringer ist, je größer ein Körper ist (Maus - Elefant).

Die Wärmegrenzleistung des Getriebes kann durch ein Kühlsystem zur Kühlung des Getriebeöls erhöht werden, bestenfalls bis zur mechanischen Nennleistung. Es gibt unterschiedliche technische Lösungen zur Ölkühlung von Getrieben mittels Wärmetauschern. Externe Ölkühlanlagen, z.B. neben einem Getriebe aufgestellte Lamellenkühler, sind aber oft unerwünscht, da sie den Aufstellraum des Getriebes vergrößern, d.h. zusätzlichen Platz benötigen, und hohe Kosten involvieren.

Öl-Wasser-Wärmetauscher sind für viele Anwendungen nicht realisierbar, da keine Wasserversorgung am Aufstellort gewährleistet ist.

Es besteht Bedarf nach einer Kühllösung, bei der der Wärmetauscher direkt am Getriebe angeordnet ist, so dass kein zusätzlicher Platz benötigt wird. Außerdem soll der Wärmetauscher in der Lage sein, auch ohne Wasserkühlung eine sehr effektive Kühlung von Getriebeöl, welches im Getriebe zur Schmierung und Kühlung benutzt wird, zu erreichen.

Die Erfindung wird in den Hauptansprüchen definiert und charakterisiert, während die abhängigen Ansprüche weitere Merkmale des Erfindung beschreiben.

Die Erfindung betrifft ein Getriebe, vorzugsweise ein Kegelstirnradgetriebe, mit einem Getriebegehäuse und mit einer Antriebswelle. Die Antriebswelle, auch bezeichnet als: Eingangswelle, ist im Gehäuse, vorzugsweise in einem Lagertopf, gelagert. Auf der Antriebswelle ist ein Lüfter montiert; dabei kann es sich um einen Axial- oder einen Radiallüfter handeln. Das Getriebe umfasst einen die Antriebswelle umschließenden Ringkühler. Das Getriebe umfasst außerdem Ölleitungen zum Transport von Getriebeöl in einem Ölkreislauf aus dem Inneren des Getriebegehäuses zu dem Ringkühler und von dem Ringkühler in das Innere des Getriebegehäuses. Und das Getriebe umfasst eine den Ringkühler umgebende Luftleithaube zum Leiten von durch den Lüfter angesaugter Luft auf den Ringkühler.

Die Erfindung betrifft also die Verwendung eines Ringkühlers als Wärmetauscher zur Kühlung von Getriebeöl. Der Ringkühler wird so an der Antriebsseite des Getriebes befestigt, dass er die Antriebswelle umgibt. Das Getriebeöl wird mittels einer Pumpe, vorzugsweise einer Flanschpumpe, durch den Wärmetauscher befördert. Auf der Antriebswelle ist ein Radiallüfter montiert. Eine Luftleithaube umschließt den Ringkühler und den Teil des Getriebegehäuses, der sich an die Antriebswelle anschließt. Durch den Lüfter wird die Umgebungsluft in die Luftleithaube und durch den Ringkühler gesaugt. Nachfolgend tritt die im Ringkühler erwärmte Luft aus dem Lüfter aus.

Zweck der Erfindung ist es, ein kompaktes Kühlsystem zu schaffen, bei dem ein Öl-Luft-Wärmetauscher in den Bereich der Luftleithaube des Getriebes integriert ist. Das Getriebeöl wird dabei mit Hilfe einer Flanschpumpe durch einen Ringkühler gepumpt, welcher die Antriebswelle, auch als Eingangswelle bezeichnet, umgibt. Ein Lüfter auf der Antriebswelle saugt Umgebungsluft in die Luftleithaube und um die Rohre, auch bezeichnet als: Öllamellen, des Ringkühlers herum. Dabei können die Rohre des Ringkühlers einen runden, eckigen oder beliebigen anderen Querschnitt aufweisen. Rohre in diesem Sinne ist jeder Hohlkörper, der zum Transport von unter Druck stehendem Getriebeöl geeignet ist. Die Rohre können z.B. als hohle Lamellen ausgebildet sein, durch deren Hohlraum das Getriebeöl gepumpt werden kann. Die angesaugte Umgebungsluft nimmt beim Umströmen der Rohre, welche erwärmtes Getriebeöl aus dem Inneren des Getriebes transportieren, Wärme von den Rohren auf und tritt als erwärmte Kühlluft aus dem Lüfter aus.

Ringkühler wurden bislang zur Kühlung von Motoren von Landmaschinen und Militärfahrzeugen eingesetzt. Die Nutzung eines Ringkühlers als Öl-Luft-Wärmetauscher zur Kühlung von Getrieben, insbesondere Kegelstirnradgetrieben, war bislang nicht bekannt. Durch die Verwendung eines Ringkühlers zur Kühlung von Getrieben, insbesondere Kegelstirnradgetrieben, wird eine sehr effektive Kühllösung in einen neuen Einsatzbereich eingeführt.

Ein Ringkühler hat den Vorteil, auf einem kleinem Volumen eine große Wärmemenge abzuführen. Außerdem kann er gut an die Getriebeform angepasst werden, z.B. um die Antriebswelle oder einen Lagertopf eines Kegelradgetriebes gelegt werden, so dass man trotz des zusätzlichen Kühlsystems ein sehr kompaktes Getriebe behält.

Das Kühlsystem kann ohne zusätzliche Primärenergie betrieben werden, da der Lüfter und die Pumpe von rotierenden Wellen des Getriebes antreibbar sind.

Ein weiterer Vorteil der Erfindung ist, dass der Aufstellraum des Getriebes durch das Kühlsystem nicht vergrößert wird, im Gegensatz zu herkömmlichen Öl-Luft-Kühlern. Durch die Positionierung des Ringkühlers um die Antriebswelle im Lüfterbereich ergibt sich eine optimale Ausnutzung eines bei herkömmlichen Kühlsystemen nicht genutzten Bauraums.

Die Erfindung führt also zu einer Vergrößerung der Wärmeabfuhr an Getrieben. Dabei ist durch eine Variation der Ausgestaltung des Ringkühlers, des Lüfters und der Pumpe eine Anpassung der abführbaren Wärmemenge möglich. Somit wird eine Möglichkeit zur Leistungssteigerung an Getrieben erzielt, da die Wärmegrenzleistung wesentlich erhöht werden kann. Trotzdem benötigt dieses effektive Kühlsystem keinen zusätzlichen Bauraum, sondern stellt durch die Anordnung des Ringkühlers um die Antriebswelle eine sehr kompakte Kühllösung dar.

Der saugende Lüfter auf der Antriebswelle führt zu einer umfassenden, effektiven Anströmung des Ringkühlers.

Gemäß einer bevorzugten Ausgestaltung der Erfindung umfasst das Getriebe eine in den Ölkreislauf geschaltete Pumpe, welche durch eine Getriebewelle des Getriebes antreibbar ist. Vorzugsweise handelt es sich um eine Flanschpumpe, welche durch eine Welle des Getriebes angetrieben wird. Der Vorteil dabei ist, dass der Ölkreislauf nur dann in Bewegung ist und somit eine Ölkühlung über den Ringkühler nur dann erfolgt, wenn das Getriebe läuft, also wenn Verlustwärme im Getriebe entsteht. Es ist aber auch möglich, dass es sich um eine von einem Motor angetriebene Pumpe handelt.

Gemäß einer bevorzugten Ausgestaltung der Erfindung umfasst der Ringkühler eine Eintrittsöffnung und eine Austrittsöffnung, über welche der Ringkühler in den Ölkreislauf geschaltet ist, sowie eine oder mehrere zwischen der Ein- und der Austrittsöffnung verlaufende, die Antriebswelle umschließende Rohre. Es existiert eine erste Ölleitung, welche das Innere des Getriebes, vorzugsweise den Ölsumpf, mit der Eintrittsöffnung des Ringkühlers verbindet. Außerdem existiert eine zweite Ölleitung, welche die Austrittsöffnung des Ringkühlers mit dem Inneren des Getriebes, vorzugsweise einer Öleintrittsöffnung im vertikal oberen Bereich des Getriebegehäuses verbindet, von wo aus das Getriebeöl zu Kühl- oder Spritzstellen geleitet werden kann. Von dort fließt das Öl durch die Schwerkraft in einen vertikal unteren Bereich des Getriebegehäuses, vorzugsweise den Ölsumpf, so dass der Ölkreislauf geschlossen ist.

Der Ringkühler weist außerdem ein oder mehrere Rohre auf, welche zwischen der Ein- und der Austrittsöffnung verlaufen und durch welche Getriebeöl, angetrieben durch die Pumpe, transportiert werden kann. Dabei umschließen die Rohre die Antriebswelle, so dass der Ringkühler ringförmig ausgebildet ist. Die zur Wärmeübertragung vom Getriebeöl auf die die Rohre umströmende Umgebungsluft dienenden Rohre sind vorzugsweise aus einem Material mit guter Wärmeleitung gefertigt, z.B. einem Metall.

Gemäß einer bevorzugten Ausgestaltung der Erfindung weist der Ringkühler zwischen den Rohren als Luftdurchlässe dienende schlitzartige Öffnungen, auch bezeichnet als: Luftlamellen, auf. Die durch den Lüfter aus der Umgebung angesaugte Luft strömt aufgrund der Luftleithaube zu dem Ringkühler und dort an den Rohren vorbei durch die schlitzartigen Öffnungen. Von den Rohren nimmt die Luft Wärme auf und wird als erwärmte Kühlluft durch den Lüfter radial nach außen in die Umgebung gedrückt.

Gemäß einer bevorzugten Ausgestaltung der Erfindung weist der Ringkühler eine quadratische Form auf. Die Kühlelemente werden dabei, aus einer axialen Ansicht gesehen, quadratisch angeordnet und mit als Eckverbinder dienenden Verbindungsreservoirs gekoppelt, wobei die vier rechteckigen Kühlelemente entlang den Seiten des Quadrats und vier Verbindungsreservoirs an den Ecken des Quadrats angeordnet sind. Die Kühlelemente und gegebenfalls außerdem die Verbindungsreservoirs sind vorzugsweise aus einem Material mit guter Wärmeleitung gefertigt, z.B. einem Metall. Alternativ zu einem quadratischen Querschnitt des Ringkühlers ist eine Ausführung mit einem runden Querschnitt des Ringkühlers möglich. Die Kühlelemente umfassen jeweils mindestens ein Rohr, durch welches das Getriebeöl fließen kann; vorzugsweise weist jedes Kühlelement zwei oder mehr Rohre auf. Die parallel verlaufenden Rohre sind dabei durch schlitzartigen Öffnungen voneinander beabstandet. In diesen schlitzartigen Öffnungen können Lamellen angeordnet sein, welche die Oberfläche des Ringkühlers vergrößern, um einen große Oberfläche für eine effektive Wärmeabfuhr zu generieren.

Die Leistungsfähigkeit des Kühlsystems kann durch die Geometrie des Ringkühlers beeinflusst werden. So kann die axiale Länge des Ringkühlers so gewählt werden, dass dieser den Kegelhals des Getriebes vollständig abdeckt. Über die radiale Dicke des Kühlkörpers kann die Größe des Oberfläche eingestellt werden. Die Kühlluftmenge, die den Ringkühler durchströmt und somit die abgeführte Wärmemenge, kann durch die Dimensionierung des Lüfters und des Kühlkörpers beeinflusst werden. Über den Volumenstrom der den Öltransport bewirkenden Pumpe kann die Kühlleistung ebenfalls beeinflusst werden. Auf diese Weise kann das Kühlsystem optimal an die abzuführende Wärmemenge angepasst werden.

Gemäß einer bevorzugten Ausgestaltung der Erfindung umgibt der Ringkühler die Antriebswelle auf seiner gesamten axialen Erstreckung radial. Der Vorteil dabei ist, dass der gesamte im Bereich der Antriebswelle existierende Bauraum zur Anordnung des Ringkühlers und somit zur Kühlung genuttz wird. Das erhöht die Kühlungsleistung des Kühlsystems.

Gemäß einer bevorzugten Ausgestaltung der Erfindung sind in den schlitzartige Öffnungen wärmeleitende Lamellen angeordnet. Die Lamellen, welche vorzugsweise benachbarte Rohre wabenartig miteinander verbinden, erhöhen die wärmeabgebende Oberfläche des Ringkühlers erheblich. Das erhöht die Kühlungsleistung des Kühlsystems.

Gemäß einer bevorzugten Ausgestaltung der Erfindung ist die Antriebswelle in einem Lagertopf gelagert und der Ringkühler umgibt außer der Antriebswelle auch den Lagertopf. Der Vorteil eines Lagertopfes ist, dass für ein Stirnrad- und ein Kegelstirnradgetriebe grundsätzlich dasselbe Getriebegehäuse verwendet werden kann, wobei die einzige Modifikation für ein Kegelstirnradgetriebe der Anbau eines Lagertopfes oder Kegelhalses ist.

Gemäß einer bevorzugten Ausgestaltung der Erfindung ist der Lüfter ein Axial- oder Radiallüfter. Der Radiallüfter hat den Vorteil, dass er unabhängig von der Drehrichtung wirksam ist.

Diese und andere Merkmale des Erfindung ergeben sich aus der folgenden Beschreibung einer bevorzugten Ausführungsform der Erfindung, die ein nicht einschränkendes Beispiel darstellt und in der auf die folgenden Zeichnungen Bezug genommen wird. Dabei zeigt jeweils schematisch und nicht maßstabsgetreu:
- FIG 1: eine Schrägansicht eines Kegelstirnradgetriebes mit einem Ringkühler;
- FIG 2: eine Seitenansicht des in FIG 1 gezeigten Kegelstirnradgetriebes;
- FIG 3: eine Schrägansicht des in FIG 1 gezeigten Kegelstirnradgetriebes mit einer Lüfterhaube;
- FIG 4: eine Schrägansicht eines Ringkühlers;
- FIG 5: eine Draufsicht des in FIG 4 gezeigten Ringkühlers;
- FIG 6: eine Seitenansicht des in FIG 1 gezeigten Kegelstirnradgetriebes mit Strömungslinien; und
- FIG 7: eine Schrägansicht des in FIG 1 gezeigten Kegelstirnradgetriebes mit Strömungslinien.

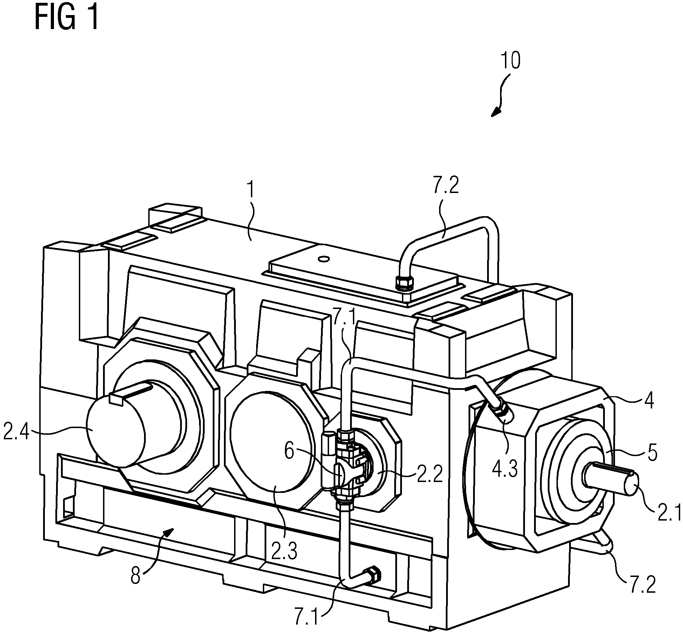

FIG 1 zeigt eine Schrägansicht eines Kegelstirnradgetriebes 10 mit einem Ringkühler 4. Ein im wesentlich quaderförmiges Getriebegehäuse 1, umfassend zwei Stirnseiten, zwei Längsseiten und je einen Boden und einen Deckel, weist an der antriebsseitigen Stirnseite einen Lagertopf 5 auf, in dem eine Antriebswelle 2.1 gelagert ist. Über eine im Inneren des Getriebegehäuses angeordnete Kegelstufe (nicht dargestellt), wird die Rotation der Antriebswelle 2.1 auf eine erste Zwischenwelle 2.2 übertragen, die in den zwei gegenüberliegenden Längsseiten des Getriebegehäuses 1 gelagert ist. Von dort wird die Rotation über eine zweite Zwischenwelle 2.3 auf eine Abtriebswelle 2.4 übertragen, die beide parallel zu der erste Zwischenwelle 2.2 in den Längsseiten des Getriebegehäuses 1 gelagert sind. Die Antriebswelle 2.1 weist eine Passfeder zur Verbindung mit einer Motorwelle, die Abtriebswelle 2.4 eine Passfeder zur Verbindung mit einer Arbeitsmaschine auf.

Im unteren Bereich des Getriebegehäuses, d.h. oberhalb des Bodens, befindet sich ein Ölsumpf 8, in dem sich aufgrund der Gravitation das im Inneren des Getriebegehäuses 1 enthaltene Getriebeöl, welches zur Schmierung und Kühlung dient, sammelt. Im Bereich des Ölsumpfes 8 ist in einer Längsseite des Getriebegehäuses 1 eine Durchgangsbohrung eingebracht, an der eine erste Ölleitung 7.1 beginnt. Die erste Ölleitung 7.1 führt zu einer Flanschpumpe 6, welche an der Stirnseite der ersten Zwischenwelle 2.2 an der Außenseite des Getriebegehäuses 1 angeordnet ist. Von dort führt die erste Ölleitung 7.1 weiter entlang der Außenseite des Getriebegehäuses 1 zu einer Eingangsöffnung 4.3 eines Ringkühlers 4, welcher den Lagertopf 5 radial umschließt. Von einer Ausgangsöffnung des Ringkühlers 4, welche diametral zu der Eingangsöffnung 4.3 am Ringkühler 4 angeordnet ist, führt eine zweite Ölleitung 7.2 entlang der Außenseite des Getriebegehäuses 1 zu einer weiteren Durchgangsbohrung, welche im Deckel des Getriebegehäuses 1 eingebracht ist.

Im Betrieb des Getriebes 10 dreht ein Motor die Antriebswelle 2.1, was zu einer langsameren Rotation der ersten Zwischenwelle 2.2 führt, wodurch die mit der ersten Zwischenwelle 2.2 gekoppelte Flanschpumpe 6 angetrieben wird. Infolgedessen saugt die Flanschpumpe 6 durch die erste Ölleitung 7.1 Getriebeöl aus dem Ölsumpf 8 und drückt es durch den Ringkühler 4, wo das Getriebeöl abgekühlt wird. Vom Ringkühler 4 aus gelangt das Getriebeöl durch die zweite Ölleitung 7.2 zurück in das Innere des Getriebegehäuses 1.

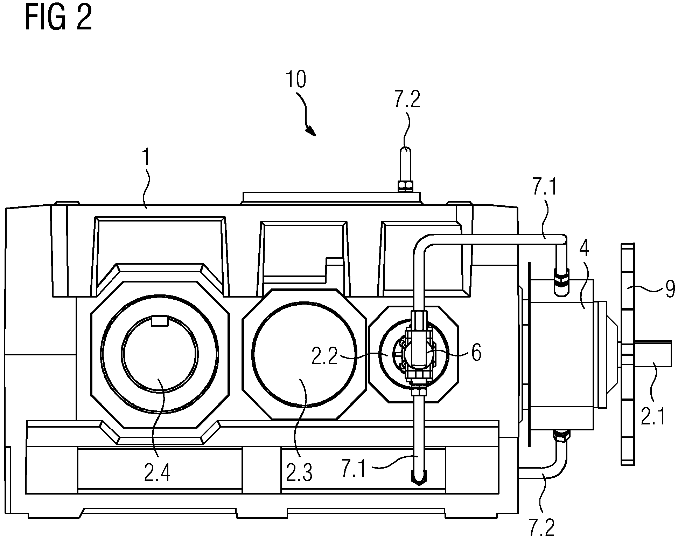

FIG 2 zeigt eine Seitenansicht des in FIG 1 gezeigten Kegelstirnradgetriebes 10, wobei zusätzlich ein Radiallüfter 9 dargestellt ist, welcher auf der Antriebswelle 2.1 befestigt ist. Im Betrieb des Getriebes 10 dreht ein Motor die Antriebswelle 2.1, was zu einer gleichschnellen Rotation des Radiallüfters 9 führt. Eine Rotation des Radiallüfters 9 führt zu einem Ansaugen von Umgebungsluft vom der antriebsseitigen Stirnseite gegenüberliegenden Ende des Getriebegehäuses 1 her entlang der Außenseite des Getriebegehäuses 1 und über den Ringkühler 4 bis zum Radiallüfter 9, wo die angesaugte Umgebungsluft, nunmehr durch Aufnahme von Wärme von dem Getriebe entsprechend erwärmt, durch den Radiallüfter radial nach außen in die Umgebung weggedrückt wird.

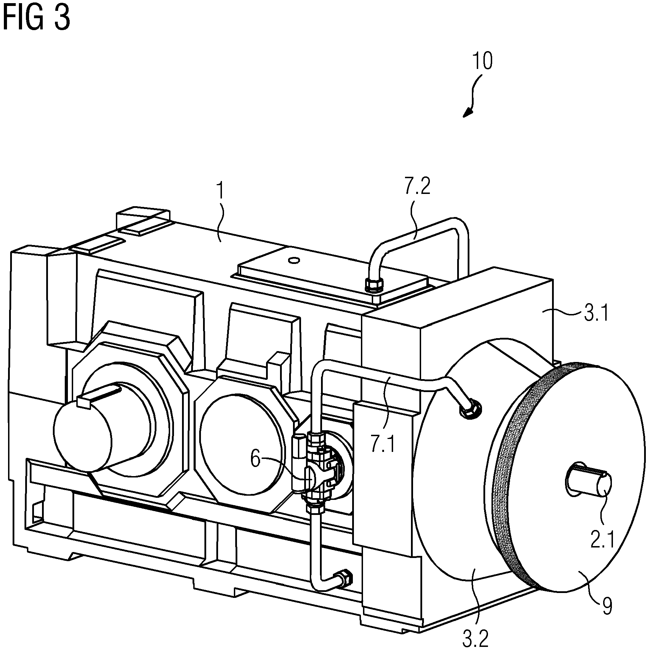

FIG 3 zeigt eine Schrägansicht des in FIG 2 gezeigten Kegelstirnradgetriebes, welches gemäß der vorliegenden Erfindung zusätzlich mit einer Lüfterhaube 3.1, 3.2 ausgestattet ist. Der den Lagertopf 5 umgebende Ringkühler 4 ist in FIG 3 unter der Lüfterhaube 3.1, 3.2 verborgen. Die Lüfterhaube 3.1, 3.2 umfasst einen wannenförmigen Teil 3.1 mit einem stirnseitigen Bodenblech und einem umlaufenden Rand, welcher die antriebsseitige Stirnseite einfasst und zu dem der antriebsseitigen Stirnseite gegenüberliegenden Ende des Getriebegehäuses 1 hin einen Öffnungsspalt, gebildet zwischen der Kante der Luftleithaube 3.1 und der Außenseite des Getriebegehäuses 1, aufweist. Die Lüfterhaube 3.1, 3.2 umfasst außerdem ein kegelstumpfförmiges Halsteil 3.2, welches mittig auf dem Bodenblech des wannenförmigen Teils 3.1 sitzt und den Ringkühler 4 radial umschließt. Dabei ist das Bodenblech des wannenförmigen Teils 3.1 an der Verbindungsstelle mit dem Halsteil 3.2 entsprechend der Größe des Halsteils 3.2 ausgeschnitten, so dass über den Öffnungsspalt der Lüfterhaube 3.1, 3.2 einströmende Umgebungsluft in das das Innere des Halsteils 3.2 einströmen kann. Das Halsteil 3.2 ist an seiner zum Lüfter 9 gewandten Stirnseite ebenfalls offen, so dass Umgebungsluft aus dem Inneren des Halsteils 3.2 zum Lüfter 9 hin abgesaugt werden kann. Zur Durchführung der ersten, zum Ringkühler 4 hin führenden Ölleitung 7.1 und der zweiten, vom Ringkühler 4 weg führenden Ölleitung 7.2 durch den Halsteil 3.2 der Lüfterhaube weist der Halsteil 3.2 entsprechende Durchgangslöcher auf.

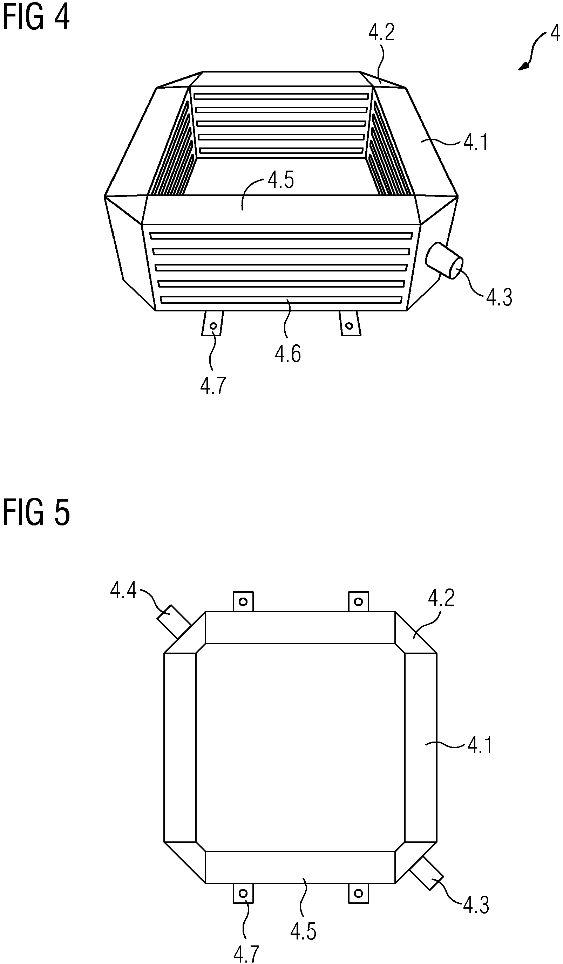

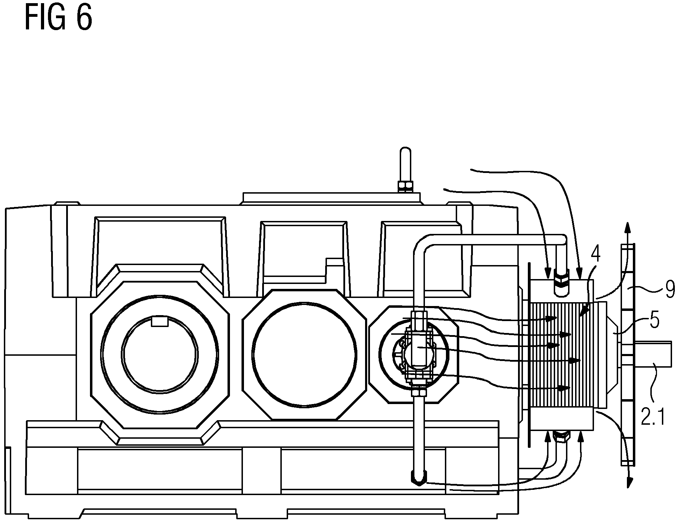

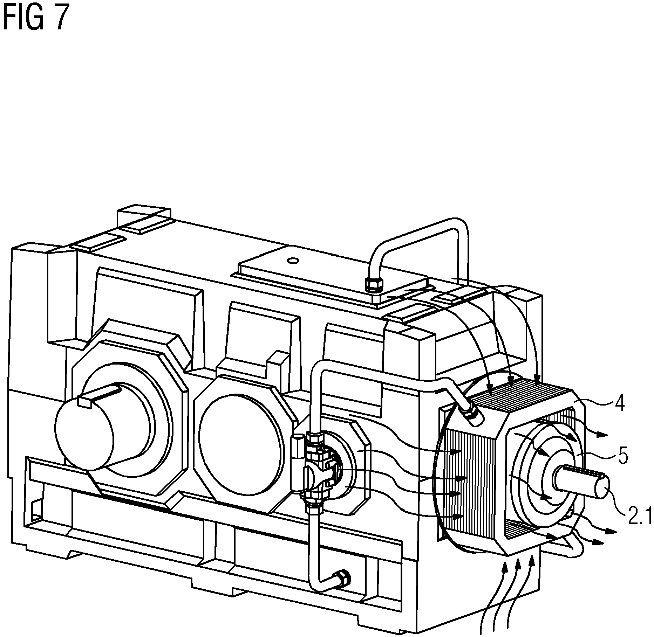

FIG 4 und 5 zeigen eine Schräg- bzw. axiale Ansicht eines Ringkühlers 4, welcher in der in FIG 5 gezeigten axialen Ansicht eine quadratische Grundform aufweist. Vier entlang der Seiten eines Quadrats angeordnete Kühlelemente 4.1 sind an den Ecken des Quadrats mittels vier als Eckverbindern dienenden Verbindungsreservoirs 4.2 verbunden. Zwei diametral gegenüberliegende Verbindungsreservoirs 4.2 weisen jeweils eine Eintrittsöffnung 4.3 bzw. eine Austrittsöffnung 4.4 auf. Jedes Kühlelement 4.1 weist sechs parallele Rohre 4.5 auf, welche durch dazwischenliegende schlitzförmige Öffnungen 4.6 voneinander beabstandet sind. Durch die schlitzförmigen Öffnungen kann Luft strömen und somit die ölführenden Rohre 4.5. zur effektiven Wärmeübergabe allseitig umströmen. Zur Montage des Ringkühlers 4 an der Stirnseite des Getriebegehäuses 1 weist der Ringkühler 4 Montageflansche 4.7 auf. Nach Eintreten von Getriebeöl in die Eintrittsöffnung 4.3 teilt sich der Ölstrom in zwei Teilströme auf, ein erster Teilstrom fließt "linksherum", ein zweiter Teilstrom fließt "rechtsherum" zur der gegenüberliegenden Austrittsöffnung 4.4. Jeder der beiden Teilströme verteilt sich wiederum auf die parallel verlaufenden Rohre 4.5 des in Fließrichtung jeweils ersten Kühlelements 4.1. An den als Eckverbindern dienenden Verbindungsreservoirs 4.2 vermischen sich die Ölströme aus den einzelnen parallelen Rohren 4.5 wieder und teilen sich wiederum auf die parallel verlaufenden Rohre 4.5 des in Fließrichtung jeweils zweiten Kühlelements 4.1. Am austrittsseitigen Verbindungsreservoirs 4.2 vermischen sich alle Ölströme aus den beiden Teilströmen und strömen durch die Austrittsöffnung 4.4 ab. Durch die offene Bauweise des Ringkühlers kann jedes Rohr 4.5 des Ringkühlers von kühlender Ungebungsluft umströmt werden. FIG 6 und 7 zeigen den Strömungsverlauf von Umgebungsluft im Bereich des Ringkühlers 4 an dem in FIG 3 gezeigten, erfindungsgemäßen Kegelstirnradgetriebes in zwei unterschiedlichen Ansichten, einer Seiten- und einer Schrägansicht. Die Lüftungshaube 3.1, 3.2 ist in FIG 6 und 7 zur besseren Darstellung der Strömungspfeile zwar ausgeblendet, aber bei dem Verlauf der Strömungspfeile berücksichtigt. Das Lüfterrad des Radiallüfters 9 ist in FIG 7 zur besseren Darstellung der Strömungspfeile ebenfalls ausgeblendet, aber bei dem Verlauf der Strömungspfeile berücksichtigt. Eine Rotation des Radiallüfters 9 führt zu einem Ansaugen von Umgebungsluft vom der antriebsseitigen Stirnseite gegenüberliegenden Ende des Getriebegehäuses 1 her entlang der Außenseite des Getriebegehäuses 1 in den Öffnungsspalt der Lüfterhaube 3.1, 3.2 und von dort über den Ringkühler 4, insbesondere auch durch die schlitzartigen Öffnungen zwischen den Rohren 4.5 des Ringkühlers 4, bis zum Radiallüfter 9, wo die angesaugte Umgebungsluft, nunmehr durch Aufnahme von Wärme von dem Getriebe entsprechend erwärmt, durch den Radiallüfter 9 radial nach außen in die Umgebung weggedrückt wird.

## Patentansprüche

1. Getriebe (10), vorzugsweise Kegelstirnradgetriebe, mit einem Getriebegehäuse (1), einer Antriebswelle (2.1), auf welcher ein Lüfter (9) montiert ist, umfassend einen die Antriebswelle (2.1) umschließenden Ringkühler (4), Ölleitungen (7.1, 7.2) zum Transport von Getriebeöl in einem Ölkreislauf aus dem Inneren des Getriebegehäuses (1) zu dem Ringkühler (4) und von dem Ringkühler (4) in das Innere des Getriebegehäuses (1), und eine den Ringkühler (4) umgebende Luftleithaube (3.1, 3.2) zum Leiten von durch den Lüfter (9) angesaugter Luft auf den Ringkühler (4).

2. Getriebe nach Anspruch 1, umfassend eine in den Ölkreislauf geschaltete Pumpe (6), welche durch eine Getriebewelle (2.2) des Kegelstirnradgetriebes (10) antreibbar ist.

3. Getriebe nach Anspruch 1 oder 2, wobei der Ringkühler (4) eine Eintrittsöffnung (4.3) für Getriebeöl und eine Austrittsöffnung (4.4) für Getriebeöl umfasst, über welche der Ringkühler (4) in den Ölkreislauf geschaltet ist, sowie eine oder mehrere zwischen der Eintrittsöffnung (4.3) und der Austrittsöffnung (4.4) verlaufende, die Antriebswelle (2.1) umschließende Rohre (4.5) zum Transport von unter Druck stehendem Getriebeöl.

4. Getriebe nach Anspruch 3, wobei der Ringkühler (4) zwischen den Rohren (4.5) als Luftdurchlässe dienende schlitzartige Öffnungen (4.6) aufweist.

5. Getriebe nach Anspruch 4, wobei in den schlitzartigen Öffnungen (4.6) Lamellen angeordnet sind.

6. Getriebe nach einem der vorhergehenden Ansprüche, wobei der Ringkühler (4) die Antriebswelle (2.1) auf ihrer gesamten axialen Erstreckung, soweit sie außerhalb des Getriebegehäuses (1) verläuft, radial umgibt.

7. Getriebe nach einem der vorhergehenden Ansprüche, wobei die Antriebswelle (2.1) in einem Lagertopf (5) gelagert ist und der Ringkühler (4) außer der Antriebswelle (2.1) auch den Lagertopf (5) umgibt.

8. Getriebe nach einem der vorhergehenden Ansprüche, wobei der Lüfter (9) ein Axial- oder Radiallüfter ist.

9. Verwendung eines Ringkühlers (4) als Öl-Luft-Wärmetauscher zur Kühlung von Getrieben (10).
